# EUROPEAN PATENT APPLICATION

(11) **EP 4 686 222 A1**
(43) Date of publication of application: **28.01.2026**
(21) Application number: 24215141.3
(22) Date of filing: 25.11.2024
(51) Int. Cl.: H04R 1/40, H04R 3/00

(54) **CAMERA FOR PROVIDING AUDIO INFORMATION AND METHOD AND SYSTEM FOR PROVIDING AUDIO INFORMATION**

(30) Priority: 25.07.2024 KR 20240098968
(71) Applicant: Hanwha Vision Co., Ltd., Seongnam-si, Gyeonggi-do 13488 (KR)
(72) Inventor: Sujith, Raman, Seongnam-si, Gyeonggi-do 13488 (KR); Lee, Hyun Hee, Seongnam-si, Gyeonggi-do 13488 (KR)
(74) Representative: Gulde & Partner

(57) **Abstract**

A camera includes: a multi-directional microphone configured to receive audio; a processor configured to extract audio information about the audio from the multi-directional microphone; and a memory configured to store instructions executable by the processor, where, by executing the instructions stored on the memory, the processor is configured to control: a direction information calculation module to determine geo-orientation information about the audio based on the audio information, and an audio information providing module to map information to metadata including audio clip information about an audio clip from the audio, and the geo-orientation information.

## Description

### BACKGROUND

### 1. Field

Embodiments relate to a camera for providing audio information and a method and system for providing audio information.

### 2. Description of the Related Art

A camera including a microphone may provide various information. For example, the camera may receive audio through the microphone and may provide information about the audio. For example, the camera may transmit audio clip information received through the microphone to an external device. In a method of providing audio information by using a camera, there is a need to provide audio direction and audio clip information.

### SUMMARY

Provided are a camera for providing audio information and a method and system for providing audio information. However, the embodiments are examples and the disclosure is not limited thereto.

Additional aspects will be set forth in part in the description which follows and, in part, will be apparent from the description, or may be learned by practice of the presented embodiments.

According to an aspect of the disclosure, a camera may include: a multi-directional microphone configured to receive audio; a processor configured to extract audio information about the audio from the multi-directional microphone; and a memory configured to store instructions executable by the processor, where, by executing the instructions stored on the memory, the processor is configured to control: a direction information calculation module to determine geo-orientation information about the audio based on the audio information, and an audio information providing module to map information to metadata including audio clip information about an audio clip from the audio, and the geo-orientation information.

The multi-directional microphone may be a microphone device for receiving audio generated in multi-directions. The multi-directional microphone may include a plurality of microphones.

The processor may be further configured to control the direction information calculation module to determine the geo-orientation information based on an arrival time difference, an amplitude, and an intensity of the audio received by the multi-directional microphone.

The geo-orientation information may include: direction information about a yaw corresponding to a rotation about a vertical axis of the multi-directional microphone, a roll corresponding to a rotation about a front-back axis of the multi-directional microphone, and a pitch corresponding to a rotation about a left-right axis of the multi-directional microphone; and location information about a latitude, a longitude, and an elevation of the multi-directional microphone. Here, the front-back axis may be orientated perpendicular to the vertical axis. Further, the left-right axis may be orientated perpendicular to both, the vertical axis and the front-back axis.

The audio clip information may include a uniform resource locator (URL) of the audio clip or data in which the audio clip is encoded.

The processor may be further configured to control a type classification module to classify the audio into a type based on the audio information.

The processor may be further configured to control the type classification module, based on the type of the audio being a voice, to: generate language information of the voice and text information of the voice, and detect a pre-stored keyword included in the text information.

The processor may be further configured to control the type classification module, based on the type of the audio being the voice, to: divide the audio based on a speaker included in the voice, and map identification information from the voice to the metadata.

According to an aspect of the disclosure, a system for providing audio information may include: a multi-directional microphone configured to receive audio; a camera configured to: determine geo-orientation information about the audio received by the multi-directional microphone, and map information to metadata including audio clip information about an audio clip from the audio, and the geo-orientation information; and a server configured to receive the metadata of the audio from the camera and control the camera based on the metadata.

The multi-directional microphone may be a microphone device for receiving audio generated in multi-directions. The multi-directional microphone may include a plurality of microphones.

The system may include a plurality of multi-directional microphones. For example, the system may include two multi-directional microphones, three multi-directional microphones, four multi-directional microphones, or more than four multi-directional microphones.

The system may include a plurality of cameras. For example, the system may include two cameras, three cameras, four cameras, or more than four cameras. In each of the cameras, one or more of the multi-directional microphones may arranged.

The camera may be further configured to determine the geo-orientation information based on an arrival time difference, an amplitude, and an intensity of the audio received by the multi-directional microphone.

The audio clip information may include a uniform resource locator (URL) of the audio clip or data in which the audio clip is encoded.

The camera may be further configured to classify the audio into a type based on the audio information.

The camera may be further configured to: based on the type of the audio being a voice, generate language information of the voice and text information of the voice, detect a pre-stored keyword included in the text information.

The camera may be further configured to: based on the type of the audio being a voice, divide the audio based on a speaker included in the voice, and map identification information from the voice to the metadata.

According to an aspect of the disclosure, provided is a method of providing audio information by using a multi-directional microphone provided in a camera, the method may include: extracting audio information about audio from the multi-directional microphone; determining geo-orientation information about the audio based on the audio information; and mapping information to metadata including audio clip information about an audio clip from the audio and the geo-orientation information.

The multi-directional microphone used in the method may be a microphone device for receiving audio generated in multi-directions. The multi-directional microphone used in the method may include a plurality of microphones.

In the method, a plurality of multi-directional microphones may be used. For example, two multi-directional microphones, three multi-directional microphones, four multi-directional microphones, or more than four multi-directional microphones may be used in the method.

In the method, a plurality of cameras may be used. For example, two cameras, three cameras, four cameras, or more than four cameras may be used in the method. Thereby, in each of the cameras, one or more of the multi-directional microphones may arranged.

The determining the geo-orientation information may include determining the geo-orientation information based on an arrival time difference, an amplitude, and an intensity of the audio received from the multi-directional microphone.

The determining the geo-orientation information may further include: obtaining direction information about a yaw corresponding to a rotation about a vertical axis of the multi-directional microphone, a roll corresponding to a rotation about a front-back axis of the multi-directional microphone, and a pitch corresponding to a rotation about a left-right axis of the multi-directional microphone; obtaining location information about a latitude, a longitude, and an elevation of the multi-directional microphone; and determining the geo-orientation information based on the direction information and the location information. Here, the front-back axis may be orientated perpendicular to the vertical axis. Further, the left-right axis may be orientated perpendicular to both, the vertical axis and the front-back axis.

The mapping the audio clip information to the metadata may include mapping the information about the audio clip comprising a uniform resource locator (URL) of the audio clip to the metadata, or mapping data in which the audio clip is encoded to the metadata..

The method may further include classifying the audio into a type based on the audio information.

The classifying the audio into a type may include: based on the type of the audio being a voice, generating language information of the voice and text information of the voice; and detecting a pre-stored keyword included in the text information.

The classifying the audio into a type may further include: based on the type of the audio being the voice, dividing the audio based on a speaker included in the voice; and mapping identification information from the voice to the metadata.

According to an aspect of the disclosure, provided is a non-transitory computer-readable storage medium storing a computer program which, when executed, causes a processor to execute the method including: extracting audio information about audio from the multi-directional microphone; determining geo-orientation information about the audio based on the audio information; and mapping information to metadata including audio clip information about an audio clip from the audio and the geo-orientation information.

Other aspects, features, and advantages of the disclosure will become more apparent from the detailed description, the claims, and the drawings.

### BRIEF DESCRIPTION OF DRAWINGS

The above and other aspects, features, and advantages of certain embodiments will be more apparent from the following description taken in conjunction with the accompanying drawings, in which:
FIG. 1 is a diagram for describing a configuration and an operation of a system for providing audio information, according to an embodiment;
FIG. 2 is a diagram for describing a configuration and an operation of a processor included in a system for providing audio information, according to an embodiment;
FIG. 3 is a diagram for describing a method of providing audio information, according to an embodiment;
FIG. 4 is a flowchart for describing a method of providing audio information, according to an embodiment;
FIG. 5 is a flowchart for describing a method of providing audio information, according to an embodiment; and
FIG. 6 is a diagram for describing a method of providing audio information when an image captured by a camera is displayed, according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "or" includes any and all combinations of one or more of the associated listed items. Expressions such as "at least one of," when preceding a list of elements, modify the entire list of elements and do not modify the individual elements of the list.

As the disclosure allows for various changes and numerous embodiments, certain embodiments will be illustrated in the drawings and described in the detailed description. Effects and features of the disclosure, and methods for achieving them will be clarified with reference to embodiments described below in detail with reference to the drawings. However, the disclosure is not limited to the following embodiments and may be embodied in various forms.

Hereinafter, embodiments will be described in detail with reference to the accompanying drawings, wherein the same or corresponding elements are denoted by the same reference numerals throughout and redundant descriptions are omitted.

Although the terms "first," "second," etc. may be used to describe various elements, these elements should not be limited by these terms. These terms are only used to distinguish one element from another. The singular forms "a," "an," and "the" are intended to include the plural forms as well, unless the context clearly indicates otherwise. It will be further understood that the terms "includes," "comprises," "has," "having," "including," "comprising," and the like, used herein specify the presence of stated features or components, but do not preclude the presence or addition of one or more other features or components.

Sizes of components in the drawings may be exaggerated or reduced for convenience of explanation. For example, because sizes and thicknesses of components in the drawings are arbitrarily illustrated for convenience of explanation, the disclosure is not limited thereto.

It will be further understood that, when a region, component, unit, block, or module is referred to as being "on" another region, component, unit, block, or module, it may be directly on the other region, component, unit, block, or module or may be indirectly on the other region, component, unit, block, or module with intervening regions, components, units, blocks, or modules therebetween. It will be further understood that, when a region, component, unit, block, or module is referred to as being connected to another region, component, unit, block, or module, it may be directly connected to the other region, component, unit, block, or module or may be indirectly connected to the other region, component, unit, block, or module with intervening regions, components, units, blocks, or modules therebetween.

Various embodiments will now be described more fully with reference to the accompanying drawings for one of ordinary skill in the art to be able to perform the disclosure.

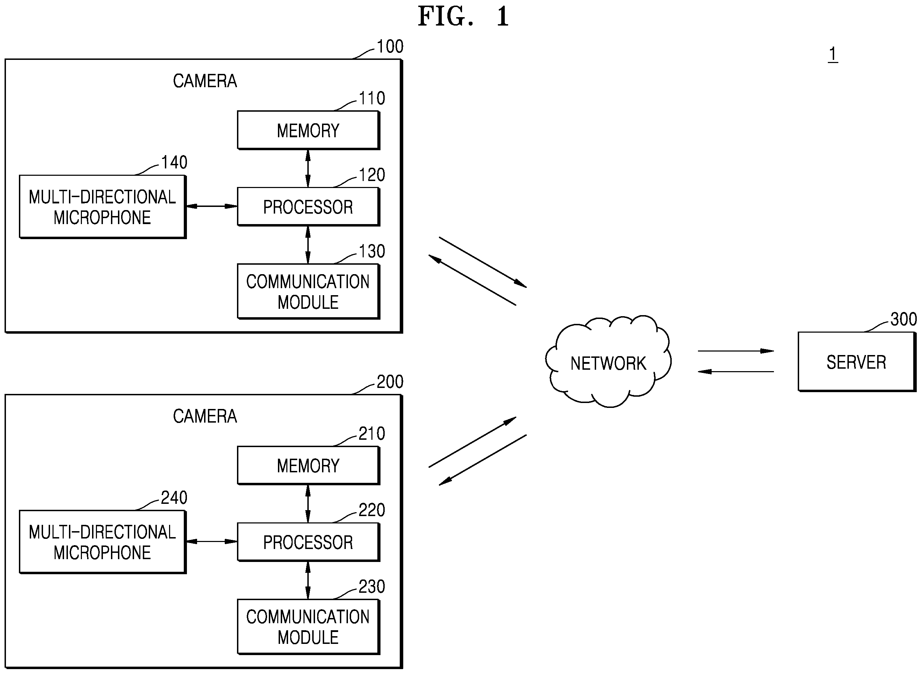

FIG. 1 is a diagram for describing a configuration and an operation of a system for providing audio information, according to an embodiment.

Referring to FIG. 1, a system 1 for providing audio information according to an embodiment may include cameras 100 and 200 and a server 300. However, the disclosure is not limited thereto, and the system 1 for providing audio information may further include other elements or some elements may be omitted. Some elements of the system 1 for providing audio information may be separated into a plurality of devices, or a plurality of elements may be combined into one device. For example, although two cameras 100 and 200 are illustrated in FIG. 1, the system 1 for providing audio information may include one camera or two or more cameras.

The server 300 may be a server device for controlling an operation of the system 1 for providing audio information. For example, the server 300 may be connected to the cameras 100 and 200 through a network to transmit and receive data with the cameras 100 and 200.

The camera 100 according to an embodiment may include a memory 110, a processor 120, and a communication module 130. Also, the camera 100 according to an embodiment may include a multi-directional microphone 140. Hereinafter, the memory 110, the processor 120, the communication module 130, and the multi-directional microphone 140, which are elements of the camera 100, will be described, but the description may apply to elements of the camera 200. Also, the description of the camera 100 may apply to the camera 200 including a memory 210, a processor 220 and a communication module 130, which may have the same or similar structures to perform the same or similar functions or operations described herein as the memory 110, the processor 120 and the communication module 230.

The multi-directional microphone 140 may be a microphone device for receiving audio generated in multi-directions. For example, the multi-directional microphone 140 may include a plurality of microphones.

The communication module 130 may provide a function for communicating with an external device through the network. For example, a request generated by the processor 120 of the camera 100 according to program code stored in a recording device such as the memory 110 may be transmitted to the external device through the network under the control of the communication module 130. Conversely, a control signal, a command, content, or a file provided from the external device may be received by the camera 100 through the network and through the communication module 130. For example, a control signal or a command of the external device received through the communication module 130 may be transmitted to the processor 120 or the memory 110. The communication module 130 may include any one or any combination of a socket, a plug, a cable, a universal serial bus (USB), a keyboard, a scanner, a digital modem, a radio frequency (RF) modem, an antenna circuit, a WiFi chip, and their equivalents along with related software and/or firmware.

A communication method is not limited, and may include not only a communication method using a communication network (e.g., a mobile communication network, wired Internet, wireless Internet, or a broadcasting network) that may be included in the network, but also short-range wireless communication between devices. For example, the network may include at least one of a personal area network (PAN), a local area network (LAN), a campus area network (CAN), a metropolitan area network (MAN), a wide area network (WAN), a broadband network (BBN), and the Internet. Also, the network may include at least one of network topologies including, but not limited to, a bus network, a star network, a ring network, a mesh network, a star-bus network, and a tree or hierarchical network.

Also, the communication module 130 may communicate with an external server through the network. A communication method is not limited, but the network may be a short-range wireless communication network. For example, the network may be a Bluetooth, Bluetooth low energy (BLE), or Wi-Fi communication network.

Also, the camera 100 according to the disclosure may include a user interface module. The user interface module may include an input/output device. For example, the input device may include a keyboard or a mouse, and the output device may include a display for displaying a communication session of an application. According to an embodiment, the user interface module may include a device in which input and output functions are integrated such as a touchscreen. According to an embodiment, when the processor 120 of the camera 100 processes a command of a computer program loaded into the memory 110, a service screen or content configured by using data provided by the external device may be displayed on the display through the user interface module.

The memory 110 may be implemented as a non-transitory computer-readable recording medium, and may include a random-access memory (RAM), a read-only memory (ROM), or a permanent mass storage device such as a disk drive. Also, program code for controlling the camera may be temporarily or permanently stored in the memory 110.

The processor 120 may control an overall operation of the camera 100. It should be understood that the functions of the processor 120 may be implemented by one processor, or may be implemented by a plurality of processors. For example, the processor 120 may selectively include a processor, an application-specific integrated circuit (ASIC), another chipset, a logic circuit, a register, a communication modem, and/or a data processing device known in the art to perform the above operation. For example, the processor 120 may perform basic arithmetic, logic, and input/output operations and may execute program code stored in the memory 110. The processor 120 may store data in the memory 110 or may load data stored in the memory 110.

The multi-directional microphone 140 according to an embodiment may receive audio therearound. Also, the multi-directional microphone 140 may be mounted on the camera 100.

The camera 100 according to an embodiment may calculate geo-orientation information of the audio based on information about the audio received from the multi-directional microphone 140. The camera 100 may map information about an audio clip of the audio and the geo-orientation information to metadata. For example, the audio clip may represent audio data.

The server 300 according to an embodiment may receive the metadata of the audio from the camera 100 and may control the camera 100 based on the metadata. For example, the server 300 may control an image-capturing direction of the camera 100 based on the geo-orientation information of the audio included in the metadata. For example, the server 300 may control an image-capturing direction of the camera 100 to a direction in which the audio is generated based on the geo-orientation information of the audio included in the metadata. For example, an RTP extension header in which a new field is defined may be used to transmit the metadata between the server 300 and the camera 100 according to an embodiment. For example, the geo-orientation information of the audio obtained by the camera 100 may be contained in an audio description field defined in the RTP extension header and may be transmitted to the server 300. The server 300 may interpret the audio description field defined in the RTP extension header received from the camera 100 to check the geo-orientation information of the audio.

The camera 100 may calculate the geo-orientation information of the audio based on an arrival time difference, an amplitude, and an intensity of the audio received from the multi-directional microphone 140. For example, the geo-orientation information of the audio may indicate information for estimating a direction of the audio based on the camera 100 including the multi-directional microphone 140. For example, the geo-orientation information may be represented by geo-orientation parameters including yaw, roll, and pitch.

The camera 100 may provide information about the audio clip including a uniform resource locator (URL) of the audio clip or data in which the audio clip is encoded. For example, the audio clip may be transmitted as a URL, or may be transmitted as binary data. For example, when the audio clip is transmitted as a URL, the server 300 receiving the audio clip from the camera 100 may access the received URL and may download the audio clip. Binary data of the audio clip may be encoded and may be transmitted from the camera 100 to the server 300. When the audio clip is transmitted as the binary data, the server 300 may convert encoded text back into binary data and may store the audio clip.

The camera 100 may classify the audio for each pre-determined type based on the information about the audio. For example, types of the audio may include voice, music, noise, etc.

When a type of the audio is voice, the camera 100 may generate language information of the voice and text information of the voice. For example, the language information may include information such as Korean, English, Japanese, Chinese, etc.

According to an embodiment, the camera 100 may detect a pre-stored keyword included in the text information of the voice. For example, the camera 100 may detect a pre-stored keyword such as 'Help' included in the text information of the voice.

According to an embodiment, the camera 100 may divide the audio based on a speaker included in the voice and may map unique identification information about the speaker to the metadata. For example, the camera 100 may distinguish a plurality of speakers included in the voice and may divide the audio based on the speakers. Also, the camera 100 may map unique identification information about each speaker to the metadata of the audio. For example, the unique identification information may include an ID of the speaker.

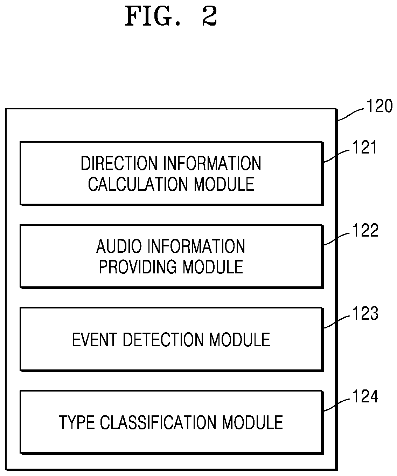

FIG. 2 is a diagram for describing a configuration and an operation of a processor included in a system for providing audio information, according to an embodiment.

Referring to FIG. 2, the processor 120 according to an embodiment may include a direction information calculation module 121 and an audio information providing module 122. Also, the processor 120 may further include an event detection module 123 and a type classification module 124. According to some embodiments, elements of the processor 120 including these modules 121-124 may be selectively included in or excluded from the processor 120. According to an embodiment, the elements of the processor 120 may be separated or combined to express functions of the processor 120.

The processor 120 and the elements of the processor 120 may be configured to execute instructions according to at least one program code and code of an operating system included in the memory 110. Elements of the processor 120 may represent different functions of the processor 120 performed by the processor 120 according to a command provided by the program code stored in the memory 110. For example, the processor 120 may include at least microprocessor such as one central processing unit (CPU), graphic processing unit (GPU), etc., and each of the modules 121-123 may be or may be implemented by software and/or firmware controlled by the at least one microprocessor to perform corresponding functions or operations described herebelow. In this case, these modules 121-123 may be stored in the memory 110, an internal memory of the processor 120 or an external memory connected to the camera 100 in a wired or wireless manner.

The direction information calculation module 121 may calculate, based on information about audio received from the multi-directional microphone 140 for receiving surrounding audio, geo-orientation information of the audio based on the multi-directional microphone 140. For example, because the multi-directional microphone 140 is provided in the camera 100, the geo-orientation information of the audio may be represented based on the camera 100. For example, the geo-orientation information of the audio may be provided together with geolocation information of the camera 100 (e.g., latitude, longitude, and elevation).

The audio information providing module 122 may map information about an audio clip of the audio and the geo-orientation information of the audio to metadata about the audio.

The direction information calculation module 121 may calculate the geo-orientation information of the audio based on an arrival time difference, an amplitude, and an intensity of the audio received from the multi-directional microphone 140.

The direction information calculation module 121 may calculate the geo-orientation information of the audio including direction information including information about yaw representing rotation around a vertical axis of the multi-directional microphone 140, roll representing rotation around a front-back axis of the multi-directional microphone 140, and pitch representing rotation around a left-right axis of the multi-directional microphone 140 and location information including information about latitude, longitude, and elevation of the multi-directional microphone 140. For example, yaw may represent rotation around a vertical axis of the camera 100. Also, roll may represent rotation around a front-back axis of the camera 100. Also, pitch may represent rotation around a left-right axis of the camera 100. Also, the location information may include information about latitude, longitude, and elevation of the camera 100.

The audio information providing module 122 may provide the information about the audio clip including a uniform resource locator (URL) of the audio clip or data in which the audio clip is encoded. For example, the audio clip may be included in the metadata as base64 encoded data.

The event detection module 123 may detect an audio classification event and an audio detection event. For example, when an audio classification function is activated in the camera 100 and the audio is recognized as a preset type, the event detection module 123 may generate an audio classification event. For example, when the audio classification event is detected, an audio class type, a location, a direction, and an audio clip URL may be provided. Also, when an audio detection function is activated in the camera 100, the event detection module 123 may generate an audio detection event. For example, when a volume of detected audio exceeds a preset threshold value, an audio detection event may be detected, and when the audio detection event is detected, a location, a direction, and an audio clip URL may be provided.

The type classification module 124 may classify the audio for each pre-determined type based on the information about the audio.

When a type of the audio is voice, the type classification module 124 may generate language information of the voice and text information of the voice and may detect a pre-stored keyword included in the text information of the voice.

Also, when a type of the audio is voice, the type classification module 124 may divide the audio based on a speaker included in the voice and map unique identification information about the speaker to the metadata about the audio.

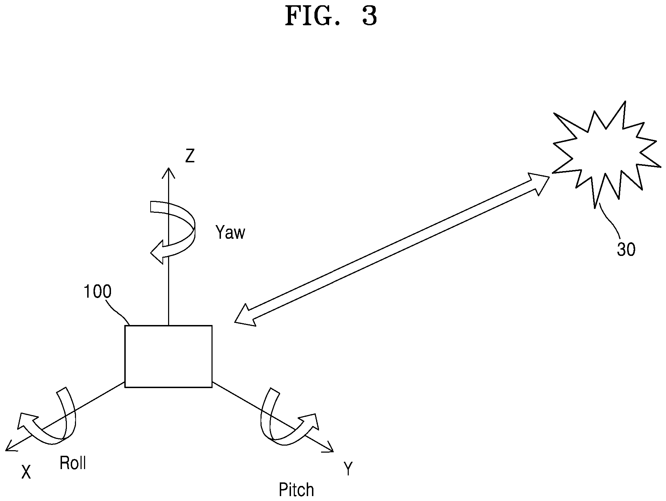

FIG. 3 is a diagram for describing a method of providing audio information, according to an embodiment.

Referring to FIG. 3, an embodiment in which the camera 100 according to an embodiment provides a direction of audio according to an audio generation event 30 is illustrated.

In the camera 100 according to an embodiment, a device's geolocation (GPS) and geo-orientation may be set in relation to magnetic north. For example, the camera 100 may be equipped with built-in GPS, gyro, accelerometer, and magnetometer sensors.

For example, as shown in FIG. 3, yaw, roll, and pitch angles of the camera 100 may be defined with respect to the Up, East, and North directions of the ENU coordinate system. For example, yaw may represent rotation around a vertical axis Z of the camera 100; roll may represent rotation around a front-back axis X of the camera 100; and pitch may represent rotation around a left-right axis Y of the camera 100. For example, a default valid range for yaw, roll, and pitch may be -180° to +180°. However, the range is not limited and may be flexibly modified.

The camera 100 according to an embodiment may incorporate audio direction information into metadata and an event. In this case, when combined with geolocation information (e.g., latitude, longitude, and elevation) by using geo-orientation parameters, especially, yaw, roll, and pitch, a comprehensive representation of an audio direction may be provided. The parameters may offer a three-dimensional (3D) perspective, allowing a more accurate and detailed understanding of the audio's origin.

For example, yaw may represent rotation around a vertical axis and may indicate a left or right direction of sound. Roll which is rotation around a front-back axis, may provide a tilt or inclination of a sound source. Pitch, which is rotation around a left-right axis, may suggest whether the sound is coming from above or below.

Also, according to the disclosure, a URL of an audio clip or base64 encoded audio data may be provided. In this case, this feature may allow for direct access and retrieval of the audio data, thereby facilitating further analysis or playback as needed.

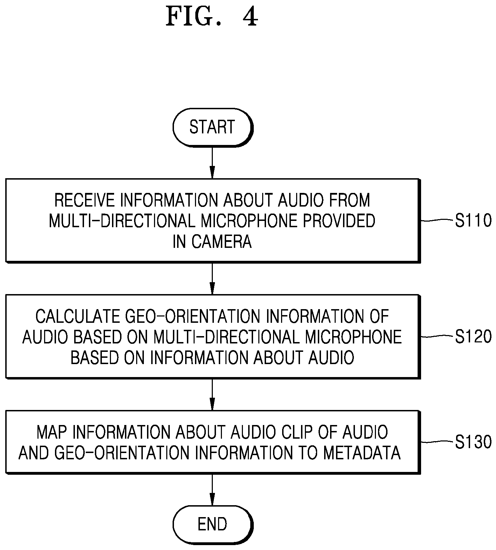

FIG. 4 is a flowchart for describing a method of providing audio information, according to an embodiment.

Referring to FIG. 4, in a method of providing audio information by using a multi-directional microphone provided in a camera according to an embodiment, in operation S110, information about audio may be received from the multi-directional microphone.

In operation S120, geo-orientation information of the audio received by the multi-directional microphone may be calculated based on the information about the audio.

The calculating of the geo-orientation information according to an embodiment may include calculating the geo-orientation information based on an arrival time difference, an amplitude, and an intensity of the audio received from the multi-directional microphone.

The calculating of the geo-orientation information according to an embodiment may include obtaining direction information including information about yaw representing rotation around a vertical axis of the multi-directional microphone, roll representing rotation around a front-back axis of the multi-directional microphone, and pitch representing rotation around a left-right axis of the multi-directional microphone, obtaining location information including information about latitude, longitude, and elevation of the multi-directional microphone, and calculating the geo-orientation information of the audio including the direction information and the location information.

In operation S130, information about an audio clip of the audio and the geo-orientation information of the audio may be mapped to metadata.

The mapping of the information about the audio clip of the audio and the geo-orientation information of the audio to the metadata according to an embodiment may include mapping the information about the audio clip including a URL of the audio clip or data in which the audio clip is encoded to the metadata.

The method of providing audio information according to an embodiment may further include classifying the audio for each pre-determined type based on the information about the audio.

The classifying of the audio for each pre-determined type according to an embodiment may include, when a type of the audio is voice, generating language information of the voice and text information of the voice and detecting a pre-stored keyword included in the text information of the voice.

The classifying of the audio for each pre-determined type according to an embodiment may include, when a type of the audio is voice, dividing the audio based on a speaker included in the voice and mapping unique identification information about the speaker to the metadata.

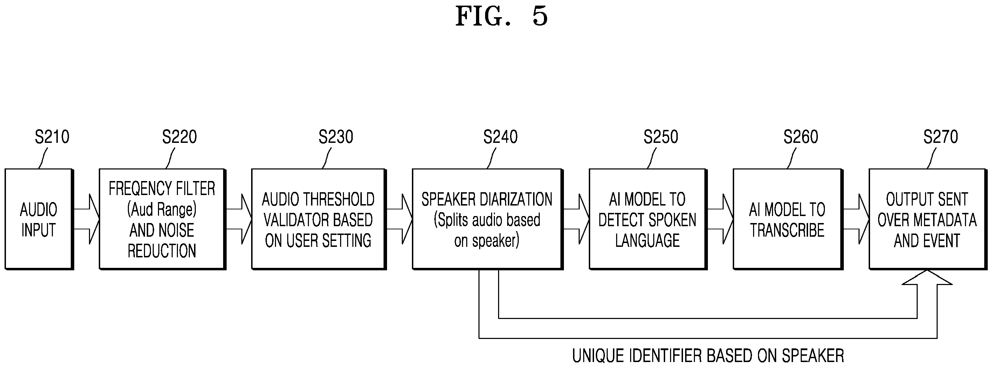

FIG. 5 is a flowchart for describing a method of providing audio information, according to an embodiment.

Referring to FIG. 5, in operation S210, audio may be input to the camera 100.

Next, in operations S220 and S230, the audio may be filtered and noise in the audio may be reduced. Also, unnecessary audio may be filtered out and only audio selected for subsequent analysis may be transmitted by using a voice activity audio threshold value based on user settings, thereby improving efficiency.

For example, the camera 100 may obtain a current geolocation of the camera 100 from manual input or from GPS, gyro, accelerometer, and magnetometer sensors built into the camera 100. When the camera 100 receives audio, because positions of microphones in the camera 100 are fixed, based on an arrival time difference (using crosscorrelation), an amplitude, and an intensity of the audio received in each microphone, the camera 100 may estimate a direction of the audio and may map the estimated direction of the audio to metadata about the audio.

For example, the camera 100 may provide an audio clip URL in the metadata for download and storing according to a user's selection. For example, geolocation and geo-orientation information in the metadata may be stored as xml data.

For example, when the user selects an option to send audio clip binary in the metadata URL, base64 encoded audio data may be embedded in the metadata together with file type information.

Next, in operation S240, the audio may be divided according to a speaker. In this case, a unique identifier for the speaker may be mapped to the metadata.

For example, the audio may be divided based on the speaker identified in the audio clip of multiple speakers conversing. For example, when there are two speakers in the audio clip, an input file may be divided into two streams. In this case, the two streams may be input to an artificial intelligence (Al) model for transcription. The transcribed data may be subsequently linked with the unique speaker.

Next, in operations S250 and S260, when the audio is voice, the audio may be input to an AI model for detecting spoken language. Also, the AI model may transcribe the spoken language into text. For example, the AI model according to an embodiment may be pre-stored in the processor 120 or the memory 110.

Next, in operation S270, information about the audio may be provided through the metadata and an event.

For example, the AI model according to an embodiment may be a pre-trained neural network model. For example, the neural network model may be designed to simulate a brain structure of human on a computer and may include a plurality of network nodes having weights and simulating neurons of a human neural network. The model may be based on a structure of a neural network known in the state-of-the-art. The plurality of network modes may transmit and receive data according to each connection relationship to simulate a synaptic activity of neurons in which neurons transmit and receive signals through synapses. The neural network model may include a deep learning model. In the deep learning model, a plurality of network nodes may be located in different layers and may transmit and receive data according to a convolution connection relationship.

For example, the neural network model may include various deep learning techniques such as deep neural network (DNN), convolutional deep neural network (CNN), recurrent Boltzmann machine (RNN), restricted Boltzmann machine (RBM), deep belief network (DBN), and deep Q-network, and may be applied to fields such as computer vision, voice recognition, natural language processing, and voice/signal processing.

When the AI model according to an embodiment converts the voice into text, information about the text of the audio together with the detected language information may be provided.

According to the disclosure, supplying information about an audio class type together with transcribed text when a class type is voice may be utilized for more in-depth analysis. For example, in an emergency situation, when there is a verbal request for help, this information may be crucial.

According to the disclosure, the audio class type may help identify the nature of sound such as voice, music, or noise. When identified as voice, the transcribed text may be analyzed for a keyword or a phrase indicating distress or a request for help. This may trigger an immediate response from an emergency service, thereby potentially saving lives. Also, the transcribed text may be used to understand the context of conversation or the situation, thereby providing insights for a decision-making process. This may be particularly useful in a scenario such as surveillance where understanding the context is important for security purposes. However, these situations are merely examples, and the disclosure is not limited thereto.

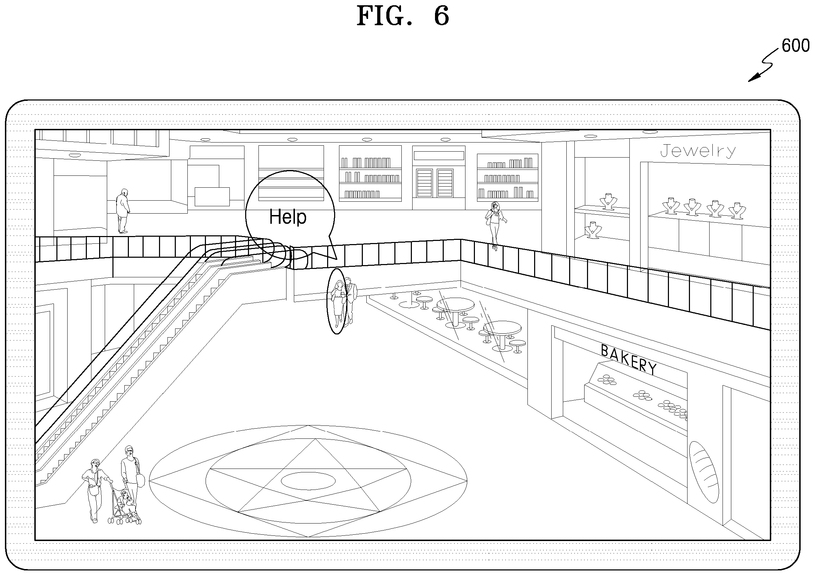

Referring to FIG. 6, an embodiment in which, when an image captured by a camera according to an embodiment is displayed, audio information is provided on a display screen 600 is illustrated. For example, the display screen 600 may refer to a display screen provided in a device that receives information about an image captured by the camera 100, such as the camera 100 or the server 300.

The camera 100 may classify audio for each pre-determined type based on information about the audio. For example, the camera 100 may classify the audio for each pre-determined type such as voice, music, or noise. For example, as shown in FIG. 6, the camera 100 may classify a woman's voice saying 'Help'.

When a type of the audio is voice, the camera 100 may generate language information of the voice and text information of the voice and may detect a pre-stored keyword included in the text information. For example, as shown in FIG. 6, in the woman's voice saying 'Help', information that it is a woman's voice, is in English, and text is 'Help' may be detected.

When a type of the audio is voice, the camera 100 may divide the audio based on a speaker included in the voice. Also, the camera 100 may display a location of a sound source on the display screen 600 based on geo-orientation information of the audio.

For example, when a plurality of voices are received from a plurality of speakers, the camera 100 may divide the audio for each speaker. For example, as shown in FIG. 6, in the woman's voice saying 'Help', the camera 100 may analyze a keyword indicating a request for help, may display the woman who uttered 'Help' on the display screen 600 in a distinctive manner, and may divide and display the woman's audio from a plurality of voices.

According to the disclosure, audio direction information may be provided in metadata and an event of a camera including a multi-directional microphone and a new audio class type field may be defined. Incorporating direction information with audio in metadata and an event may significantly enhance a client's capabilities.

For example, with known direction data, a client may guide a geo-oriented PTZ camera (e.g., a PTZ camera that is aware of its geolocation and geo-orientation) in the vicinity to align with that direction.

As another example, direction information of audio may aid in focusing on or disregarding the audio from a specific direction. For example, when there is a noisy road in a certain direction, audio from that direction may be muted.

Also, for example, a client application with a map view may use direction information of audio to indicate the audio's direction, thereby simplifying visualization.

Also, for example, a mobile entity such as a robot or an autonomous vehicle may be programmed to move in a direction of sound. For example, a rescue robot may be directed toward a source of a help request.

As is traditional in the field, the embodiments are described, and illustrated in the drawings including FIG. 2, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

A device and/or system described herein may be implemented using hardware components, software components, or a combination thereof. A device and an element described in embodiments may be implemented using one or more general-purpose or special purpose computers, for example, one or more of a processor, a controller, an arithmetic logic unit (ALU), a digital signal processor, a microcomputer, a field programmable gate array (FPGA), a programmable logic unit (PLU), a microprocessor, or any other device capable of responding to and executing instructions. A processing device may run an operating system (OS) and one or more software applications that run on the OS. Also, the processing device may access, store, manipulate, process, and create data in response to execution of software. For easy understanding, one processing device is described, but it will be understood by one of ordinary skill in the art that a processing device may include multiple processing elements and/or multiple types of processing elements. For example, the processing device may include multiple processors or a processor and a controller. In addition, other processing configurations, such as parallel processors, may be implemented.

Software may include a computer program, a piece of code, an instruction, or a combination thereof, to independently or collectively instruct or configure a processing device to operate as desired. Software and/or data may be embodied permanently or temporarily in any type of machine, component, physical or virtual equipment, computer storage medium or device, or a transmitted signal wave, to provide instructions or data to or to be interpreted by a processing device. Software may also be distributed over network coupled computer systems so that the software is stored and executed in a distributed fashion. Software and data may be stored in one or more computer-readable recording media.

A method according to an embodiment may be embodied as program commands executable by various computer means and may be recorded on a computer-readable medium. The computer-readable medium may include program commands, data files, and data structures separately or in combinations. The program commands recorded on the computer-readable medium may be specially designed and configured for embodiments or may be well-known to and be usable by one of ordinary skill in the art of computer software. Examples of the computer-readable recording medium include a magnetic medium such as a hard disk, a floppy disk, or a magnetic tape, an optical medium such as a compact disc read-only memory (CD-ROM) or a digital versatile disc (DVD), a magneto-optical medium such as a floptical disk, and a hardware device specially configured to store and execute program commands such as a ROM, a random-access memory (RAM), or a flash memory. Examples of the program commands include advanced language code that may be executed by a computer by using an interpreter or the like as well as machine language code made by a compiler. The described hardware device may be configured to operate as one or more software modules in order to perform an operation of an embodiment, and the reverse is the same.

Although the embodiments have been described by the limited embodiments and the drawings as described above, various modifications and variations are possible by one of ordinary skill in the art from the above description. For example, appropriate results may be achieved based on performance of the described techniques in a particular order, and/or the described elements such as a system, a structure, an apparatus, and a circuit are combined or integrated in a different manner from the described method or replaced or substituted by other elements or equivalents.

According to an embodiment as described above, a camera capable of effectively providing direction information of audio and a method and system for providing audio information may be implemented. However, the scope of the disclosure is not limited by this effect.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by one of ordinary skill in the art that various changes in form and details may be made therein without departing from the scope of the disclosure as defined by the following claims.

## Claims

1. A camera (100, 200) comprising:
a multi-directional microphone (140, 240) configured to receive audio;
a processor (120, 220) configured to extract audio information about the audio from the multi-directional microphone (140, 240); and
a memory (110, 210) configured to store instructions executable by the processor (120, 220),
wherein, by executing the instructions stored on the memory (110, 210), the processor (120, 220) is configured to control:
a direction information calculation module (121) to determine geo-orientation information about the audio based on the audio information, and
an audio information providing module (122) to map information to metadata including audio clip information about an audio clip from the audio, and the geo-orientation information.

2. The camera (100, 200) according to claim 1, wherein the processor (120, 220) is further configured to control the direction information calculation module (121) to determine the geo-orientation information based on an arrival time difference, an amplitude, and an intensity of the audio received by the multi-directional microphone (140, 240).

3. The camera (100, 200) according to claim 1 or 2, wherein the geo-orientation information comprises:
direction information about a yaw corresponding to a rotation about a vertical axis of the multi-directional microphone (140, 240), a roll corresponding to a rotation about a front-back axis of the multi-directional microphone (140, 240), and a pitch corresponding to a rotation about a left-right axis of the multi-directional microphone (140, 240); and
location information about a latitude, a longitude, and an elevation of the multi-directional microphone (140, 240).

4. The camera (100, 200) according to any one of claims 1 to 3, wherein the audio clip information comprises a uniform resource locator, URL, of the audio clip or data in which the audio clip is encoded.

5. The camera (100, 200) according to any one of claims 1 to 4, wherein the processor (120, 220) is further configured to control a type classification module (124) to classify the audio into a type based on the audio information.

6. The camera (100, 200) according to claim 5, wherein the processor (120, 220) is further configured to control the type classification module (124), based on the type of the audio being a voice, to:
generate language information of the voice and text information of the voice, and
detect a pre-stored keyword included in the text information.

7. The camera (100, 200) according to claim 6, wherein the processor (120, 220) is further configured to control the type classification module (124), based on the type of the audio being the voice, to:
divide the audio based on a speaker included in the voice, and
map identification information from the voice to the metadata.

8. A system (1) for providing audio information, the system (1) comprising:
a multi-directional microphone (140, 240) configured to receive audio;
a camera (100, 200) configured to:
determine geo-orientation information about the audio received by the multi-directional microphone (140, 240), and
map information to metadata including audio clip information about an audio clip from the audio, and the geo-orientation information; and
a server (300) configured to receive the metadata of the audio from the camera (100, 200) and control the camera (100, 200) based on the metadata.

9. The system (1) according to claim 8, wherein the camera (100, 200) is further configured to determine the geo-orientation information based on an arrival time difference, an amplitude, and an intensity of the audio received by the multi-directional microphone (140).

10. The system (1) according to claim 8 or 9, wherein the audio clip information comprises a uniform resource locator, URL, of the audio clip or data in which the audio clip is encoded.

11. The system (1) according to any one of claims 8 to 10, wherein the camera (100, 200) is further configured to classify the audio into a type based on the audio information.

12. The system (1) according to claim 11, wherein the camera (100, 200) is further configured to, based on the type of the audio being a voice:
generate language information of the voice and text information of the voice,
detect a pre-stored keyword included in the text information,
divide the audio based on a speaker included in the voice, and
map identification information from the voice to the metadata.

13. A method of providing audio information by using a multi-directional microphone (140, 240) provided in a camera (100, 200), the method comprising:
extracting audio information about audio from the multi-directional microphone (140, 240);
determining geo-orientation information about the audio based on the audio information; and
mapping information to metadata including audio clip information about an audio clip from the audio, and the geo-orientation information.

14. The method according to claim 13, wherein the determining the geo-orientation information comprises determining the geo-orientation information based on an arrival time difference, an amplitude, and an intensity of the audio received from the multi-directional microphone (140, 240).

15. A non-transitory computer-readable storage medium storing a computer program which, when executed, causes a processor (120, 220) to execute the method according to claim 13 or 14.
